# EUROPEAN PATENT APPLICATION

(11) **EP 4 840 687 A1**
(43) Date of publication of application: **18.11.2026**
(21) Application number: 26178997.8
(22) Date of filing: 15.05.2026
(51) Int. Cl.: B60L 58/16, B60L 1/00, B60L 3/00, B60L 53/14, B60L 53/53, B60L 53/57, B60L 53/62, B60L 53/66, B60L 58/12, B60L 58/18, H01M 10/48, H02J 7/80

(54) **SERVICE SYSTEM COMPRISING AN ELECTRICAL CHARGING AND DIAGNOSTIC APPARATUS**

(30) Priority: 16.05.2025 IT 202500011070
(71) Applicant: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(57) **Abstract**

Service system (1) comprising an electrical charging and diagnostic apparatus (6) comprising a lower base (7) fitted with a plurality of ground-supporting wheels, a box-shaped frame (8) extending above the lower base (7), a control device (14) configured to determine the state of health (SoH) of a traction battery (20a) of an electric vehicle (3) on the basis of vehicle data supplied by an OBD socket on the vehicle (3) and a series of electrical parameters measured on the battery (20a) itself.

## Description

### CROSS-REFERENCE TO RELATED PATENT APPLICATIONS

This application claims the priority of Italian Patent Application No. 102025000011070 filed on 16 May 2025, the contents of which are incorporated herein by reference.

### TECHNICAL FIELD

The present invention relates to a vehicle service system. The present invention relates to a service system provided with a service unit configured to perform both charging and diagnostic functions on a battery pack mounted in a motor vehicle.

It is well known that in the sector of maintenance and/or repair services for electric motor vehicles, particularly in garages, critical situations often arise which prevent the electric motor vehicle from being moved from the garage to a charging station where it can be recharged.

In order to overcome this problem, various devices have been devised, one of which, for example, was designed by the Applicant and is described in document WO2025052256A1, which are configured to move around the workshop to enable the user to recharge a set of power batteries for an electric traction unit fitted to a motor vehicle.

### DESCRIPTION OF THE INVENTION

The aim of the present invention is to provide a vehicle servicing system provided with apparatus that enables the user to carry out, not only to recharge the battery pack powering an on-board electric traction unit, but also to perform additional functions that are particularly convenient for garage operators.

In accordance with this objective, the present invention provides a service system for electric motor vehicles, as defined in the relevant independent claims and, preferably but not necessarily, in any of the claims dependent thereon.

The claims describe preferred embodiments of the present invention and form an integral part of this description.

### BRIEF DESCRIPTION OF THE DRAWINGS

The present invention will now be described with reference to the accompanying drawings, which illustrate a non-limiting example of its implementation, in which:
- Figure 1 schematically illustrates a service system for electric motor vehicles constructed in accordance with the principles of the present invention,
- Figures 2 and 3 are two perspective views from different angles of a service unit for electric motor vehicles belonging to the vehicle service system shown in Figure 1,
- Figure 4a shows a service apparatus for electric motor vehicles of the vehicle service system shown in Figure 1, with parts removed for the sake of clarity.
- Figure 4b illustrates a second electric charging module and the electrical cables of the apparatus illustrated in Figure 4a,
- Figures 5 to 10 are screen views of a user interface for service apparatus for electric motor vehicles, designed in accordance with the principles of the present invention.

### PREFERRED EMBODIMENTS OF THE INVENTION

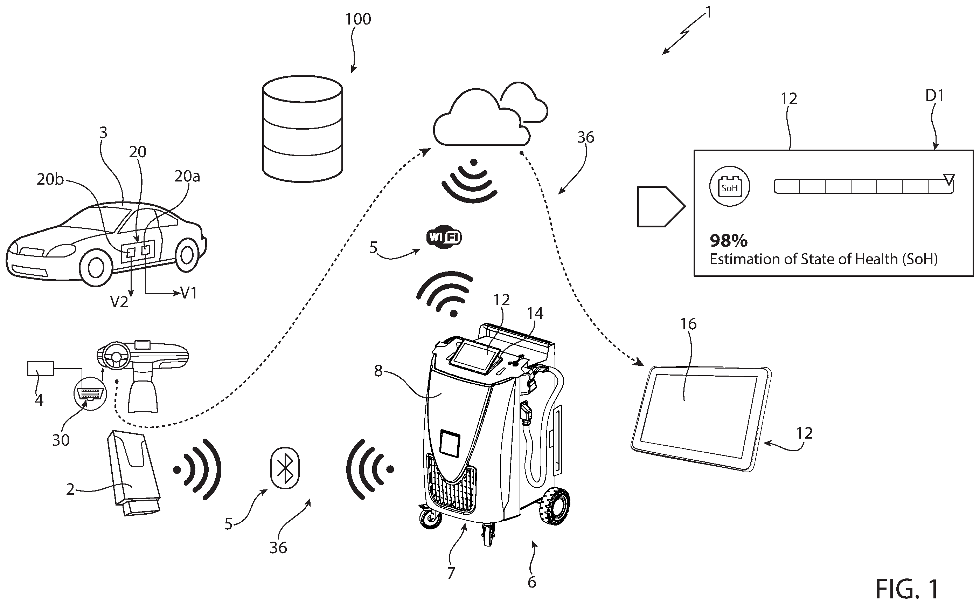

With reference to Figure 1, the number 1 indicates, as a whole, a vehicle service system configured to selectively perform at least one diagnosis and/or at least one electric recharge of one or more battery packs 20 fitted on board one or more vehicles 3. Vehicles 3 are provided with a data port 30 to provide vehicle data and battery packs 20.

The battery pack 20 comprises one or more first electric batteries 20a configured to supply a first voltage V1 to an electric traction powertrain (not shown) of the vehicle 3, and/or at least one second electric battery 20b configured to supply a second voltage V2, lower than the first voltage V1, to a starting system for an internal combustion engine (not shown) or as a backup system for the on-board auxiliary systems of a fully electric vehicle 3.
Vehicle 3 may correspond to any one of the following motor vehicles: an electric motor vehicle fitted with an electric powertrain comprising electric motors, or a non-electric motor vehicle fitted instead with an internal combustion powertrain comprising an internal combustion engine.

Electric vehicle 3 comprises one or more electric traction motors for the motor vehicle (not shown), and the battery pack 20 comprises one or more first electric batteries 20a (a battery pack) associated with the drive system to power the motor vehicle's electric traction motors. The electric vehicle 3 comprises an electric charging socket 22 which is electrically connected to the first electric battery 20a via an electrical/electronic system (not shown) present in the vehicle 3. The electrical/electronic system may be configured to supply the first traction battery 20a with a first electrical voltage V1, which may be either direct current (DC) or alternating current (AC).

The non-electric vehicle 3 may comprise an internal combustion engine, an internal combustion engine starting system and a battery pack 20 comprising a second electric engine starting battery 20b connected to the electric starting system.

The first electrical voltage V1 is a high voltage greater than 300 V, whereas the second electrical voltage V2 is a low voltage lower than 50 V.

Vehicle 3 also comprises an on-board computer 4 and a data port 30, through which vehicle data can be accessed, including, for example, on-board diagnostic data provided by the on-board computer 4.

With reference to Figure 1, according to the present invention, the vehicle service system 1 comprises a communication module 2, which is electrically connected to the data port 30. The communication module 2 is configured to be manually coupled in a stable manner, yet easily removable/detachable to/from the data port 30 of the vehicle 3.

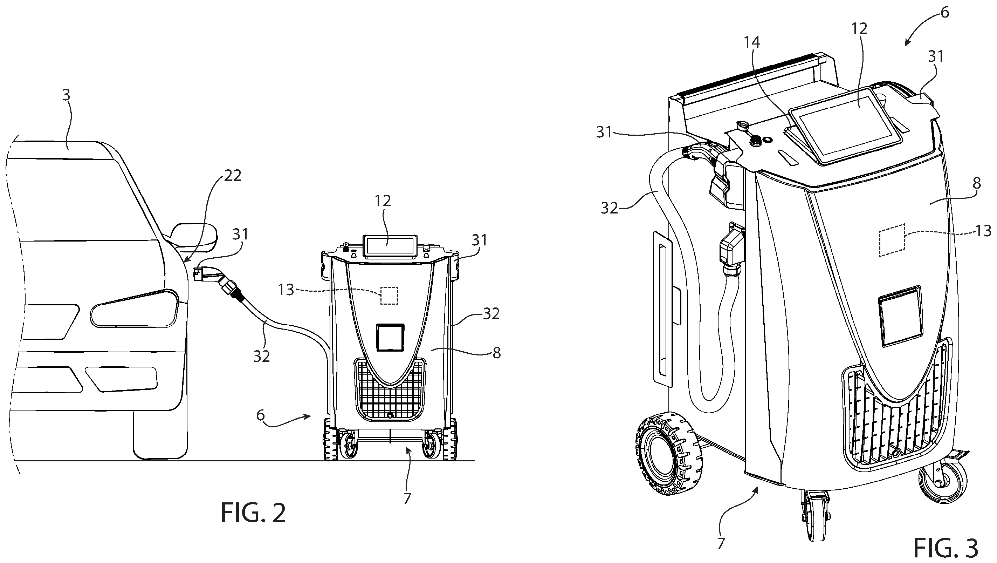

The vehicle service system 1 also comprises an electrical service apparatus for charging and/or diagnosing (shown in Figures 2-4) the battery pack 20. The electrical service unit, hereinafter referred to as apparatus 6, is mobile on a support surface and comprises a lower base 7 provided with a number of support wheels on that surface.

The apparatus 6 also comprises a box-shaped frame 8 extending vertically above the lower base 7 and at least a first electrical charging module 9, which is arranged within the box-shaped frame 8 and is configured in order to supply at least the first predetermined charging voltage V1 suitable for charging the first rechargeable batteries 20a of the vehicle 3. The first charging voltage V1 may be alternating current (AC) and/or direct current (DC).

The apparatus 6 is provided with a power supply cable 35 (general) configured to be connected, preferably manually, to the main electrical power grid VP in order to receive the electrical power used by the apparatus 6 to perform charging and/or diagnostic operations.

The apparatus 6 further comprises one or more electrical connectors 31 which are electrically connected to the first electrical charging module 9 via respective first electrical charging cables 32 to receive the first charging voltage V1. The electrical cables 32 extend from the first electrical charging module 9 to the outside of the box-shaped chassis 4. The charging electrical connector 31 is configured in order to be manually coupled to the charging electrical socket 22 of a vehicle 3 in order to charge the first traction battery 20a of the battery pack 20. According to a preferred embodiment, the apparatus 6, and in particular the first electrical charging module 9, is configured to perform two charging operations on two different vehicles 3 and comprises two electrical connectors 31 and two first electrical cables 32.

Conveniently, the apparatus 6 is configured to perform a diagnostic check or recharge of the first electric battery 20a, or a diagnostic check and/or recharge of the second electric battery 20b.

The apparatus 6 further comprises a user interface 12, which is configured to display a series of graphical interfaces, disclosed in detail below, through which the user input commands and/or receives visual and/or audible messages containing or indicating data. The data may relate to the operating parameters of the apparatus 6 and/or data relating to the battery pack 20.

The user interface 12 may comprise a control panel (e.g. touchscreen) and/or a monitor. User interface 12 may be integral with and/or detachably coupled to the box-shaped frame 8. The user interface 12 is configured in order to be easily held by the user. Alternatively, or in addition, the user interface 12 may be integrated into or arranged within a separate, portable user communication device distinct from the apparatus 6.

Apparatus 6 also comprises a communication module 13 which is configured to communicate with communication module 2 via the communication system 5 in order to exchange (send/receive) vehicle data. According to a preferred embodiment, the communication module 13 is preferably integrated into the apparatus 6 and is arranged inside the box-shaped frame 8.

Communication modules 13 may be wireless communication devices; the communication system 5 may comprise a wireless communication network 36. The wireless communication network 36 may be, for example, a communication network operating according to any known wireless communication protocol, such as a Bluetooth or Wi-Fi network or similar.

The apparatus 6 also comprises a controller or control device 14 which is configured to control the functions implemented by the apparatus 6, in particular the functions implemented by the user interface 12, the communication functions between modules 12 and 13, the battery pack 20 charging functions, and the battery pack 20 diagnostic functions.

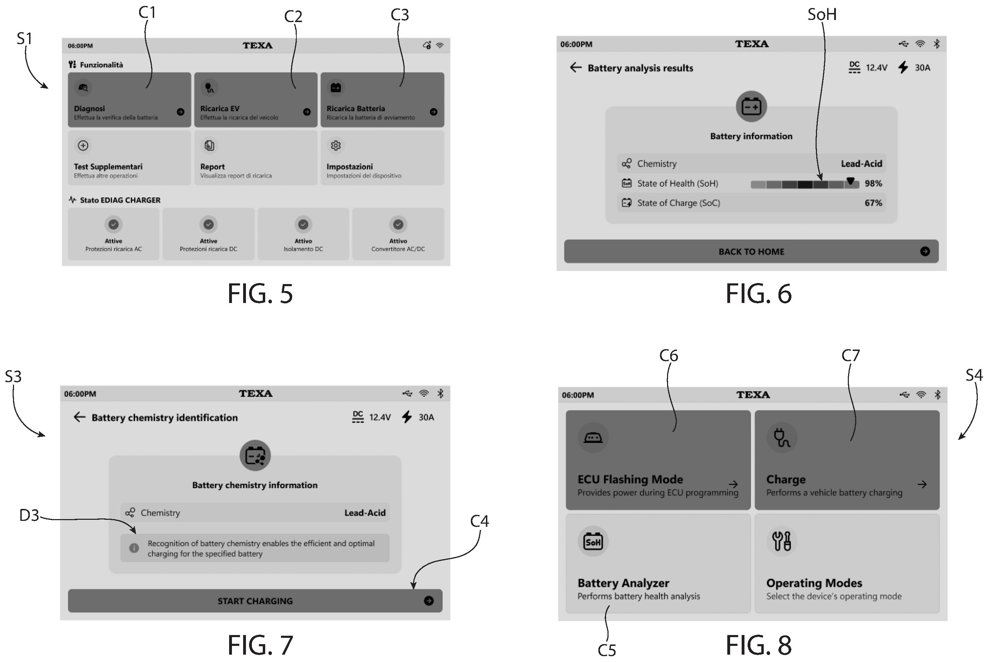

According to a preferred embodiment shown in Figure 5, the control device 14 is configured to display, via the user interface 12, a screen S1 (Figure 5) via the user interface 12, through which the user may input a command to select: a diagnostic cycle for the operating status of the second battery 20b, indicated by C1; a recharge of the first electric battery 20a, indicated by C2; or a recharge of the second electric battery 20b, indicated by C3 (Figure 5).

According to a preferred embodiment, the control device 14 is also configured to display, via the user interface 12, a screen through which the user can issue an initial command to select a diagnostic cycle for the first electric battery 20a.

When it receives the first command, the control device 14 performs the diagnostic cycle for the first electric battery 20a of the battery pack 20. When the diagnostic cycle for the first electric battery 20a is carried out, the control device 14 performs at least the following operations: it receives from the communication module 13 a set of predefined vehicle data supplied by communication module 2; it determines/measures one or more predefined initial electrical quantities (voltage, current or power, etc.) of the first electric battery 20a, estimates/determines diagnostic data indicative of the state of health (SoH) of the first electric battery 20a on the basis of the predefined vehicle data and the measured electrical parameters, and communicates the State of Health (SoH) to the user via a screen S2 on the user interface 12 (Figure 6).

In this context, the 'state of health' (SoH) of an electric battery refers to the remaining capacity of the battery to store electrical energy.

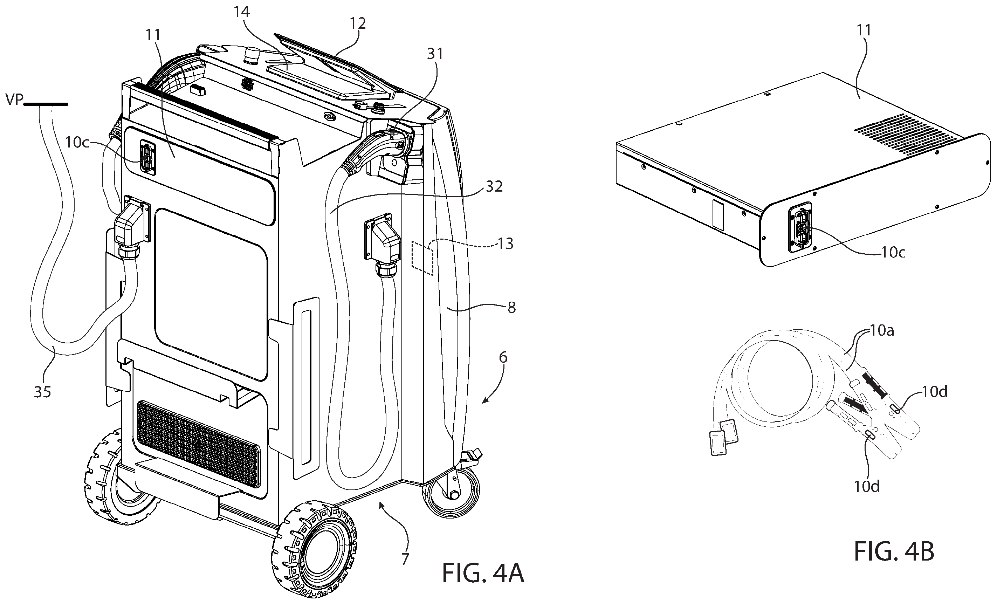

With reference to Figures 4a and 4b, the apparatus 6 comprises at least a second electric charging module 11 and second electric cables 10. The second electrical charging module 11 is configured so as to be mounted securely, yet easily removable/detachable, within the boxed housing 8. The second electrical charging module 11 is configured to supply the second voltage V2 to the second electrical battery 20b via the second electrical cables 10. The second set of cables 10 may comprise two electrical cables 10a, two electrical clamps 10b connected to one end of the two cables, and two electrical connectors 10e which are attached to the opposite ends of the electrical cables 10a and are configured to be electrically connected in an easily detachable manner to respective electrical terminals 10c of the second electrical charging module 11. The electrical clamps 10b are preferably fitted with temperature sensors 10d.

When it receives the command C3, control device 14 is configured to start a charging cycle for the second battery 20b. Ideally, the charging cycle for the second battery 20b can be fully automatic.

When a charging cycle for the second battery 20b is initiated, the control device 14 preferably carries out an automatic recognition procedure for the second battery 20b. When an automatic recognition procedure for the second battery 20b is started, the control device 14 determines, via the second cables 10, one or more second electrical parameters of the second battery 20b, and automatically identifies the type of the second battery 20b from among a plurality of different types of second batteries stored in memory, based on one or more second electrical parameters. The battery type may correspond to a type that chemically characterises the second battery 20b. The battery type may, for example, be lead-based or lithium-ion-based: lead-acid wet cells, lead-acid gel cells (or dry cells) AGM (Absorbent Glass Mat) batteries, ECM (Enhanced Cyclic Mat) batteries or EFB/AFB (Enhanced Flooded Battery/Advanced Flooded Battery) batteries.

Control device 14 is configured to display, upon completion of recognition via interface 12, a screen view S3 containing D3 data indicating the type of the second electric battery 20b (Figure 7). Following the identification of the second battery 20b, the control device 14 can carry out the charging cycle for the second battery automatically and/or in response to a signal C4 (Figure 7).

Conveniently, the control device 14 is also configured to: determine a charge state of the second electric battery 20b based on the second electrical parameters; determine an electrical charging curve for the second electric battery 20b based on the recognised type of starter battery; and control the second electrical charging module 11, so as to automatically vary, during the operation or charging cycle of the second electric battery 20b, the second charging voltage V2 and/or the corresponding charging current supplied to the second electric battery 20b, based on the charging curve and the state of charge of the second battery 20b itself.

Conveniently, the control device 14 is also configured to determine the temperature of the second electric battery 20b via the temperature sensors 10d. The control device 14 is also configured to control the second electric charging module 11 and automatically adjust the second voltage V2 and/or the corresponding charging current during the charging cycle of the second electric battery 20b, based in part on the determined temperature.

When it receives the command C5 to diagnose the operating status, control device 14 determines an electrical impedance spectrum of the second electric battery 20b, determines data relating to the operating status of the second electric battery 20b based on the electrical impedance spectrum, and communicates the operating status to the user via the user interface 12. The operating status may comprise a state in which the battery is not functioning and must be replaced; a state in which the battery's performance is below its rated value and replacement is recommended; or a state in which the battery is operating correctly within the rated operating curve.

With reference to Figure 8, the user interface 12 is also configured in order to allow a user to input a command C6 indicating the selection of a flashing operating mode. The control device 14 is configured to supply the second battery 20b with a predetermined stable voltage and to increase the current to a predetermined high value greater than the rated current. The control device 14 controls the electrical charging module 9 in order to supply a second stable voltage and a high current during the flashing operations of the on-board computer (ECUs), in particular in passthrough mode. For example, when 'flashing mode' is selected, the user is prompted to set the voltage and the maximum current.

Conveniently, during operations in flashing mode, the user interface 12 can display voltage and current readings. For example, a green LED lit indicates normal operation; a yellow LED lit indicates a current at 90% of the programmed protection threshold; a red LED lit indicates an overcurrent situation.

With reference to Figure 8, the user interface 12 is also configured in order to allow a user to input a command C7 that start the charging of the first electric battery 20a.

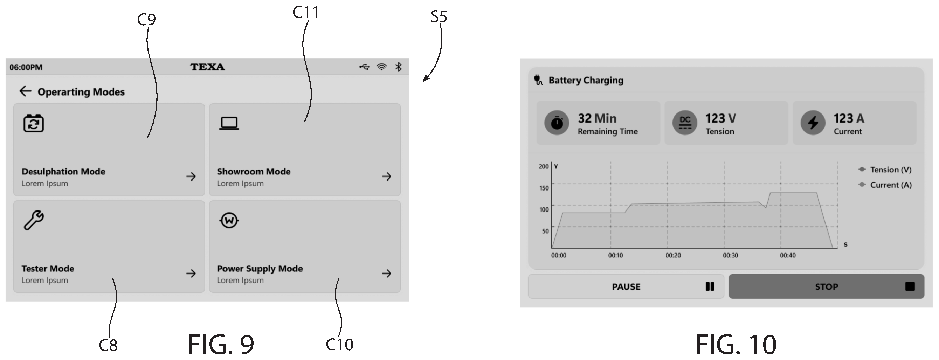

According to an embodiment shown in the attached Figures, the user interface 12 is also configured to display a screen view S5 (Figure 9) which allows a user to input a command C8 indicating the selection of a tester operating mode (Figure 8). The control device 14 is configured to perform, in response to command C8: test operations on the second voltage V2, and/or test operations on the current supplied to the second battery 20b, and/or start-up test operations, and/or alternator test operations. Tester mode allows the user to perform the following tests on the second battery 20b: it measures the actual battery voltage and displays it as a discrete value and plots it on a time-axis as an oscilloscope would. The oscilloscope display can be useful for detecting events when the battery voltage drops. A trigger level can be set to detect these events.

According to one embodiment, the control device 14 is also configured to interrupt the charging cycle of the second electric battery 20b and, via the second electronic charging module 11, instructs the execution of an automatic desulphation cycle for the second electric battery 20b. In addition or alternatively, the desulphation cycle may be carried out in response to a command C9 issued by the user via a screen view S5 (Figure 9).

According to one embodiment, the control device 14, in response to a command C10 (shown in Figure 9), is configured in order to maintain at the end of the charging cycle, the second battery 20b at a predetermined maintenance voltage, conveniently approximately equal to the second voltage V2, until it is disconnected from the second battery 20b.

According to one embodiment, the control device 14, in response to a command C11 (shown in Figure 9), is configured to execute a "Showroom" operating mode - a mode that supplies power to the vehicle in the showroom. The control device 14 selects a universal battery support cycle to prevent the battery from discharging during vehicle demonstrations. In showroom mode, the user can select certain available settings to programme the output voltage and current limit.

Conveniently, the control device 14 is also configured to detect an incorrect connection between the second cables 10 and the second electric battery 20b on the basis of the second electrical measurement values and communicates the detected incorrect connection condition to the user via the user interface 12.

Control device 14 is configured to check whether the terminals of the second battery are connected to the second electric charging module 9 with the correct polarity. In the event of detection of an incorrect connection, the control device 14 communicates to the user via the user interface 12 to change the connection of the second set of cables 10. The user interface 12 can be configured to assist the user in making the correct connection. For example, the user interface 12 may feature an LED strip that provides additional information by flashing a red light until the connection is correct.

When the manual charging procedure for the second electric battery 20b is activated, the control device 14 monitors the state of charge (SOC) of the second electric battery 20b and selects a voltage charging curve based on that state of charge.

According to an embodiment, the user interface 12 is also configured to allow the user to manually select the charging cycle for the second battery 20b. In one embodiment, the user interface 12 is configured to allow the user to enter data indicating the type of the second electric battery 20b. The user interface 12 allows the user to view a list of types of the second electric battery 20b, so as to enable the user to manually select one corresponding to the one to be charged. In response to this selection, the control unit 14 controls the second electric charging module 20b to charge the second battery 20b in accordance with the type of electric battery selected by the user.

In one embodiment, the user interface 12 is also configured to display the charging status of the second battery during the charging cycle (Figure 10).

Conveniently, the apparatus 6 may be configured to communicate via the communication system 5 with a remote computer system 100. The remote computer system 100 may comprise servers designed to store data relating to the vehicles 3 and/or data relating to the battery packs 20. Vehicle data 3 may include, for example, identification data (VIN - Vehicle Identification Number). Data relating to battery packs 20 may include, for example, data characterising the first battery 20a and the second battery 20b.

Conveniently, the charging and/or diagnostic operations described above can be performed by apparatus 6 on the first battery 20a and on the second battery 20b. Apparatus 6 is configured to perform a diagnostic check and/or recharge of the first electric battery 20a and/or a diagnostic check and/or recharge of the second electric battery 20b.

The service system described above is extremely advantageous as it is very simple and versatile, enabling mechanics to carry out a wide range of diagnostic and recharging operations on battery packs fitted to both electric vehicles and vehicles with internal combustion engines, all using a single piece of equipment.

## Claims

1. Service system (1) for vehicles provided with a data port (30) for supplying vehicle data and a battery pack (20), comprising at least a first electric battery (20a) supplying a first voltage (V) to an electric traction drive unit and/or at least a second electric battery (20b), supplying a second voltage (V2), lower than the first voltage (V1), to a starting system for an internal combustion engine, where the vehicle service system (1) comprises:
a first communication module (2) which is electrically connected to a data port (30) of a vehicle (3) and is configured to supply vehicle data to a communication system (5),
an electrical charging and diagnostic apparatus (6) comprising:
- a lower base (7) provided with a plurality of wheels resting on the ground,
- a box-section frame (8) extending above the lower base (7),
- at least one first electrical charging module (9), which is arranged within the box-shaped frame (8) to supply the first electrical voltage (V1),
- first electrical cables (10) to connect the first electrical charging module (9) to the said first electric battery (20a) in order to supply the same with the first electrical voltage (V1),
- a user interface (12) configured in order to allow a user to input an first command to select a diagnostic function for the first electric battery (20a) of the battery pack (20),
- a second communication module (13) which is arranged within the box-shaped frame (8) and is configured to communicate with the first communication module (2) via a communication system (5) to receive the said vehicle data,
- a control device (14) which is arranged within said box-shaped frame (8) and is configured in order to:
• receive from the user interface (12) the first command to select the diagnostic operating function,
• communicate with the first communication module (2) via the second communication module (13) to receive a predefined set of vehicle data via said communication system (5),
• determine one or more predefined electrical parameters of said at least one first battery (20a) via said one or more electrical cables (10),
• determining the state of health (SoH) of said at least one first battery (20a) on the basis of the predefined vehicle data and the measured first electrical parameters,
• communicate the state of health (SoH) of said at least one first battery (20a) to the user via the user interface (12).

2. A vehicle service system according to claim 1, wherein the electrical charging and diagnostic equipment (6) comprises a second electrical charging module (11) which is stably mounted, but is easily removable/separable within said box-shaped frame, and is configured to supply the second voltage (V2) to the second battery (20b) via second electrical cables (10).

3. Vehicle service system according to claim 2, wherein:
the user interface (12) is configured to allow a user to input a second command for selecting an automatic charging operating function of the second electric battery (20b),
said control device (14) is configured to:
- determine, through the second cables (10), one or more second electrical parameters of the second electric battery (20b); and
- automatically identify the type of the second electric battery (20b) from among a plurality of different second battery types on the basis of said one or more second electrical parameters.

4. A vehicle service system according to claim 3, wherein said control device (14) is configured in order to determine the state of charge of the second electric battery on the basis of the said second electrical parameters,
determine a charging curve for the second battery based on the type of starter battery identified,
control the second electric charging module (11) to automatically vary, during the charging cycle of the second electric battery (20b), the second charging voltage (V2) and/or the corresponding current on the basis of the said charging curve and the said state of charge.

5. A vehicle service system according to claims 3 or 4, wherein said control device (14) is configured to determine the temperature of the second electric battery (20b) and automatically regulates the second voltage (V2) and/or the corresponding current during the charging cycle of the second electric battery (20b), based on said temperature.

6. A vehicle service system according to claim 3 or 4, wherein said control device (14) is configured in order to detect an incorrect connection between the said second cables (10) and the second electric battery (20b) on the basis of the said second electrical measurement values, communicate the incorrect connection condition to the user by the said user interface (12).

7. A vehicle servicing system according to any of the preceding claims, wherein
the user interface (12) is configured in order to allow a user to input a third diagnostic command for the second electric battery,
said control device (14) is configured in order to:
determine, in response to the third diagnostic command, an electrical impedance spectrum of the second battery (20b),
determine the operational status of the second electric battery (20b) based on the electrical impedance spectrum,
communicate the operational status of the second electric battery (20b) to the user via the user interface (12).

8. A vehicle service system according to any of the foregoing claims, wherein the user interface (12) is configured in order to allows a user to input a fifth command indicating the selection of a flashing operating mode,
said control device (14) is configured in order that, during the flashing operating mode, it supplies a stable voltage and increases the current to a predetermined high value.

9. A vehicle service system according to any of the preceding claims, wherein
the user interface (12) is configured in order to allow a user to input a sixth command indicating the user's selection of a tester operating mode,
said control device (14) is configured in order that, during tester operating mode, it performs: second voltage (V2) test operations and/or current test operations and/or start-up test operations, and/or alternator test operations.

10. A vehicle service system according to any of the preceding claims, in which the electrical charging and diagnostic apparatus (6) is configured to perform, as selected, at least one of the following operations: a diagnosis of the first electric battery (20a) and/or a charging of the first electric battery (20a), or a diagnosis and/or a charging of the second electric battery (20b).
